# EUROPÄISCHE PATENTSCHRIFT

(11) **EP 3 442 385 B1**
(45) Veröffentlichungstag und Bekanntmachung des Hinweises auf die Patenterteilung: **14.08.2024**
(21) Anmeldenummer: 17725346.5
(22) Anmeldetag: 05.04.2017
(51) Int. Cl.: A47J 37/07

(54) **GRILL**
GRILL
GRILL

(30) Priorität: 13.04.2016 CH 4832016
(43) Veröffentlichungstag der Anmeldung: 20.02.2019
(73) Patentinhaber: Outdoorchef AG, 8052 Zürich (CH)
(72) Erfinder: BITTEL, Andre, 5644 Auw (CH)
(74) Vertreter: Frommhold, Joachim
(86) Internationale Anmeldenummer: PCT/IB2017/051949
(87) Internationale Veröffentlichungsnummer: WO 2017/178927

(56) Entgegenhaltungen:
- WO-A1-2009/062281
- WO-A1-2012/025807
- DE-U1- 202013 100 613
- US-A- 3 693 534
- US-A- 5 163 358
- US-A1- 2002 195 096

## Beschreibung

Die Erfindung betrifft einen Grill, zum Beispiel einen Gasgrill nach dem Oberbegriff des Patentanspruchs 1 zum Grillen, Garen oder Backen von Speisen auf einem Grillrost oder dergleichen, insbesondere zur Verwendung im Freien. Er weist eine Brennkammer auf, in der eine Brenneranordnung vorgesehen ist, wobei die Brennkammer mit einer klappbaren Haube versehen ist, die im geschlossenen Zustand einen Grillrost abdeckt.

Grills und Gasgrills zum Garen von Grillgut resp. Speisen weisen zumindest einen Grillkörper mit einem Grillrost oder dergleichen zur Auflage des Grillgutes sowie darunter befindlichen Mitteln zur Wärmeerzeugung, insbesondere glühende Holzkohle, Heizelemente oder Gasbrenner auf. Je nach Ausstattung der Grillgeräte ist weiterhin ein Deckel oder eine Haube zum Verschluss des Grillkörpers vorgesehen. Bei einfachen Grills ist der Deckel vom Grillkörper getrennt und lose aufsetzbar. Bei vielen Grills ist der Deckel als Klappdeckel jedoch fest mit dem Grillkörper verbunden.

Aus der EP 0653917 B1 ist ein Grill zur Verwendung im Freien bekannt, bei dem zwischen einer Wärmequelle, insbesondere ein Gasbrennerring im unteren Bereich eines Grillbehälters und einem Rost zur Auflage des Grilliergutes eine Wandung eingesetzt ist, die Tropfen vom Grilliergut, insbesondere Fett oder Wasser auf die Wärmequelle verhindert und solche Tropfen oberhalb der Wärmequelle sammelnd auffängt. Die Tropfen werden in einen, unterhalb der Wärmequelle angeordneten Behälter geleitet. Hierbei sind diejenigen Bereiche der Wandung, die aufgrund ihrer Temperatur ein Verdampfen von Tropfen bewirken, in einem Winkel von 30° bis 70° zur Horizontalen geneigt angeordnet. Die Wandung ist in Form von Kugelschalenabschnitten gebildet. Sie beinhaltet Leitmittel, die die Tropfen in einen zentralen Aussparungsbereich der Wärmequelle und von da in den unterhalb der Wärmequelle angeordneten Behälter leiten.

Bei einem Gasgrillgerät gemäss DE 202012100587 U ist unterhalb einer Brennereinheit eine Fettauffangeinrichtung angeordnet, die mehrere, nebeneinander befindliche Fettauffangschalen umfasst. Eine ähnliche Lösung ist in der US 4909137 A offenbart. Ebenso können anstelle von Schalen auch Ablaufwinkel (DE 08804071 U) oder Rinnen (DE 2020099014563 U) Verwendung finden.

Bei einem weiteren Grill dieser Art ist eine Einrichtung zur Wärmeleitung vorgesehen, die Garvorgänge bei direkter und indirekter Wärmeführung ermöglicht. Beim direkten Grillen wird die Wärme der Wärmequelle bei offenem Deckel direkt auf das zu garende Grilliergut geleitet, während beim indirekten Grillen die Wärme von der Wärmequelle mittels einer Wärmeleiteinrichtung seitlich um das Grilliergut geführt wird und erst durch Umlenkung unter dem geschlossenen Deckel auf das Grilliergut gelangt. Zum Wechsel zwischen direkter und indirekter Wärmeführung weist der Grillkörper einen Einsatz mit verschliessbaren Öffnungen auf. Mittels eines aussen am Grillkörper geführten Handgriffs, der mit dem Einsatz verbunden ist, kann die Offen- und Schliessstellung der Öffnungen erreicht werden. In der DE 202014004089 U wird zudem eine Brennerabdeckung aus V-förmig abgewinkelten Elementen für eine homogene Wärmeverteilung vorgeschlagen, die den gesamten Brennerraum überdeckt.

Zur Verbesserung der Grillleistung können auch Brenner oder Heizstrahler seitlich zum Grillrost angeordnet sein und/oder für variables Grillen sind unterschiedliche Grillroste oder Grillkammern vorgesehen.

Einen Grill mit einem geteilten Grillkörper zeigt die US 3693534. Hierbei ist im Grillkörper eine feststehende Trennwand als Teil des Grillkörpers vorgesehen, so dass zwei unabhängig voneinander betreibbare Grillbereiche mit den jeweiligen Wärmequellen gegeben sind.

Ein ähnlicher Grill ist in der WO 2012/025807 A1 offenbart, wobei aus feststehenden Trennwänden sogar vier Grillbereiche resultieren.

Ein weiterer ähnlicher Grill ist in der DE 202013100613 U1 beschrieben. Hierbei sind Trennbleche in eine Feuerkammer einsetzbar, die mittels Steckverbindungen mit dieser verbindbar sind. Es können jeweils mehrere Steck- oder Klemmverbindungen verwendet werden.

Zudem sind die Trennbleche vollständig in der Feuerkammer angeordnet, zwecks Teilung von Feuerkammer und Rostauflage.

In der US 2002/195096 A1 ist ein Grill mit verschiedenen Grilloptionen offenbart. Dieser Grill umfasst eine Brennkammer mit einem Brenner, wobei die Brennkammer mit einer klappbaren Haube versehen ist. Der Grill ist weiterhin mit einem Grillrost und einem Bratrost versehen. Unterhalb des Grillrosts ist eine Brennerabdeckung als Diffusor vorgesehen, was eine indirekte Erwärmung des Grillguts ermöglicht. Die Brennerabdeckung erstreckt sich zwischen Rückwand und Frontseite der Brennkammer und liegt an deren inneren Rändern auf.

In der WO 2009/062281A1 ist ein Divider offenbart, der in seiner Flexibilität sehr begrenzt ist. Wenn sich Grillgut auf dem Rost befindet, kann der Divider weder eingesetzt noch herausgenommen werden.

In der US 5163358 A ist ein weiterer Grill bekannter Bauart offenbart, dessen Grillrost durch eine Trennwand teilbar ist. Vor dem Gebrauch der Trennwand muss ein Halter für die Trennwand montiert werden. Die Trennwand wird in die Stege geklemmt und ohne dieses klemmen kann die Trennwand nicht stabil stehen und offensichtlich die gedachte Funktion nicht erfüllen. Zudem wird eine zusätzliche Baugruppe benötigt, die manuell einzusetzen.

Der Grill ist mit einer einfache Brennerabdeckung zur ungerichteten Wärmeverteilung versehen.

Der Erfindung liegt nun die Aufgabe zugrunde, einen Grill zum Grillen, Garen oder Backen von Speisen wie Fleisch oder Fisch auf einem Grillrost oder dergleichen, insbesondere zur Verwendung im Freien zu schaffen, der eine einfache und zuverlässige Umstellung zwischen direktem und indirektem Grillen sowie direktes und indirektes Grillen gleichzeitig und energiesparend ermöglicht.

Die Aufgabe ist mit den Merkmalen des Patentanspruchs 1 gelöst.

Erfindungsgemäss weist ein Grill, zum Beispiel ein Gasgrill, ein spezifisch geformtes Trennblech auf, das den Grillrost teilt und dass bevorzugt auch als Halterung, zum Beispiel für einen Drehspiess oder Ablagen verwendbar ist.

Der erfindungsgemässe Grill ist zum Grillen, Garen oder Backen von Speisen wie Fleisch, Fisch, Milchprodukten, Gemüse oder Backwaren auf einem Grillrost oder dergleichen, insbesondere zur Verwendung im Freien geeignet. Das erfindungsgemässe Trennblech ermöglicht eine Geschmacksverbesserung des Grillguts.

Neben einer Gas- bzw. Energieeinsparung verbessert sich auch die Arbeitssicherheit beim Grillen.

Das erfindungsgemässe Trennblech ist einfach zu reinigen und ohne Einsatz von Werkzeugen einlegbar und aus dem Gasgrill entnehmbar, so dass es auch in einem Geschirrspüler gereinigt werden kann.

Das Trennblech erstreckt sich bis unterhalb des Grillrosts 6. Es liegt bevorzugt auf dem inneren Rand einer Brennkammer des Grills auf. Hierzu können zum Beispiel Absätze als Auflage- und Positionierhilfen am Trennblech ausgeformt, sein.

Bevorzugte Ausführungsformen sind in den abhängigen Ansprüchen offenbart.

In abgewandelter Form kann das Trennblech zusätzlich einen senkrecht und beidseitig zu seiner Hauptfläche verlaufenden Steg aufweisen, wobei sich die Hauptfläche ebenfalls unterhalb des Steges erstreckt.

Weiterhin ist ein ebenfalls ohne Werkzeug und ohne Befestigungselemente einsetzbares Leitblech vorgesehen, das die gleichzeitige Anwendung unterschiedlicher Garverfahren zulässt und bevorzugt in Verbindung mit einem Drehspiess verwendbar ist.

Das Leitblech ist mit Vertiefungen und Abtropfelementen versehen, in denen Flüssigkeit aus dem Gargut zusammenfliessen und ablaufen kann.

Die Erfindung wird nachfolgend in einem Ausführungsbeispiel in Form eines Gasgrills anhand einer Zeichnung näher beschrieben. In der Zeichnung zeigen die
Fig. 1: einen erfindungsgemässen Grill in Teilansicht,
Fig. 2: ein erfindungsgemässes Leitblech für indirektes Grillen,
Fig. 3: ein erfindungsgemässes Trennblech,
Fig. 4: den Grill nach Fig. 1 in Rückansicht,
Fig. 5: das Leitblech nach Fig. 2 in anderer Ausführungsform,
Fig. 6: das Trennblech und das Leitblech in einer weiteren Ausführungsform.

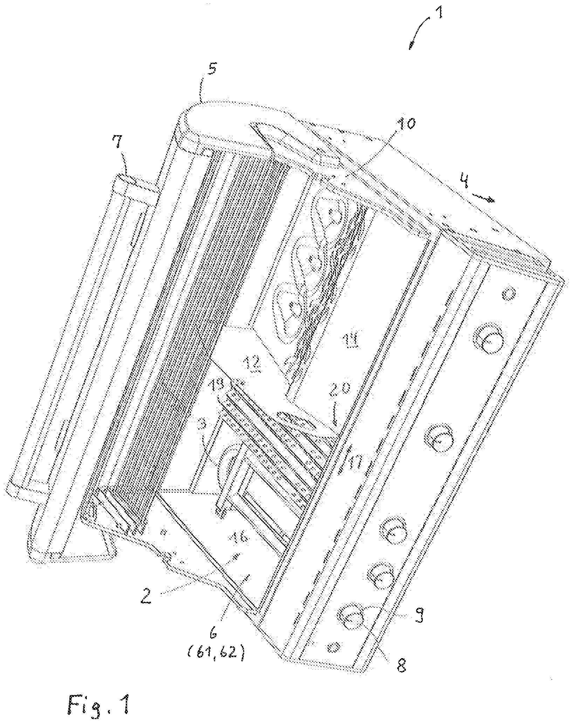

Ein erfindungsgemässer Grill, im Ausführungsbeispiel ein Gasgrill 1 (Fig. 1) weist eine Brennkammer 2 auf, in der eine Brenneranordnung 3 vorgesehen ist, wobei die Brennkammer 2 mit einer klappbaren Haube 5 versehen ist, die im geschlossenen Zustand einen Grillrost 6 abdeckt. Die Haube 5 ist mittels Scharnier an der Rückwand der Brennkammer 2 oder an, den Grillrost 6 dreiseitig umgebenden Seitenwänden 10 angeschlagen. Für das Auf- und Zuklappen ist die Haube 5 mit einem Handgriff 7 versehen.

Zwischen Brennern der Brenneranordnung 3 und dem Grillrost 6 ist noch ein Flammenschutz 19 positioniert, der dazu dient, die Gefahr resp. die Auswirkungen von Fettflammenbrand o. a. zu reduzieren.

Die Brennkammer 2 ist auf einem, ggf. rollfähigen Untergestell 4 aufsitzend angeordnet und kann über seitliche, nicht dargestellte Ablagen für Geschirr oder Grillgut verfügen. Die Brenneranordnung 3 umfasst mindestens ein zum Beispiel ringförmiges oder in Schlaufen angeordnetes Brennerrohr (im einfachsten Fall ein gerades Brennerrohr) mit Ausströmöffnungen für ein Brenngas.

Das Untergestell 4 dient in bekannter Weise der Unterbringung von Gasflasche, Armaturen, Grillwerkzeugen, Geschirr etc. und kann offen oder bevorzugt mittels seitlichen Wänden und Türen geschlossen ausgebildet sein.

An der, dem Benutzer zugewandten Frontwand (Frontpanel) der Brennkammer 2 ragt mindestens ein, mit den Brennern der Brenneranordnung 3 in üblicher Ausführung gekoppelter Drehgriff 8 zur Einstellung der Brennerleistung. Der Drehgriff 8 ist mit einem Leuchtring 9 in Form farbiger LED's in der Frontwand umgeben. Dieser Leuchtring 9 leuchtet auf, sobald ein, nicht dargestelltes Gasventil geöffnet und die Zündeinrichtung des Brenners aktiv ist, insbesondere bereits vor dem ausströmen von Gas. Die Zündeinrichtung kann dazu zum Beispiel am Ventil oder mit einem separaten "Startknopf" gekoppelt sein.

Auf oder in der Brennkammer 2 sind oberhalb resp. beabstandet von der Brenneranordnung 3 Grillroste 6 unterschiedlicher Art auf- bzw. einlegbar, sowohl Stab- oder Gitterroste oder Plattenroste. Die festen Seitenwände 10 begrenzen die Grill- bzw. Rostfläche, können aufgrund ihrer Formgebung die Haube 5 seitlich führen und können auch Aufnahmen 11 für einen Drehspiess o. a. aufweisen.

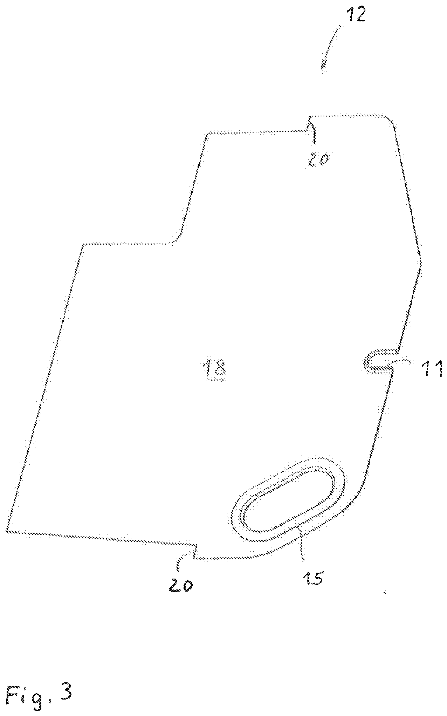

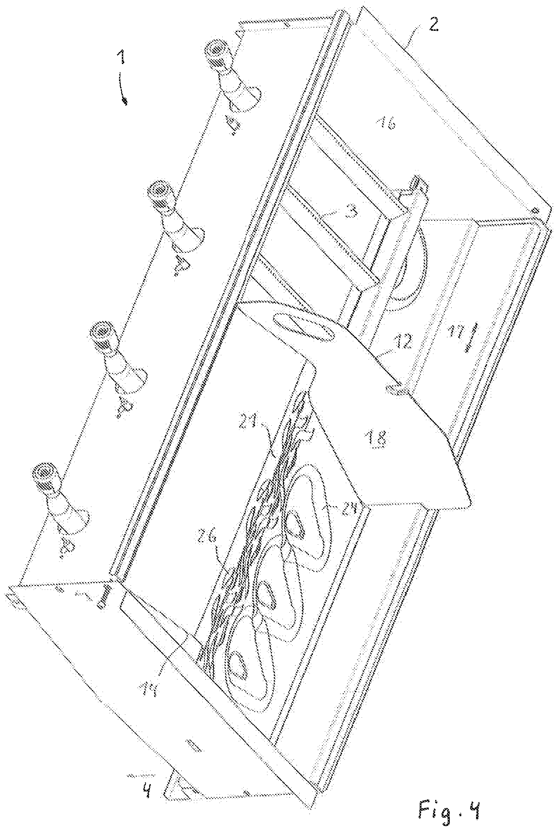

Parallel zu den festen Seitenwänden 10 ist ein, ohne Befestigungselemente oder dergleichen einlegbares Trennblech 12 (DGS Zone divider, wobei DGS für Dual Gourmet System steht) vorgesehen, das die Grillfläche teilen kann und das an der Brennkammer 2 geführt ist, siehe Fig. 3 und 4. Im Ausführungsbeispiel liegt es auf dem inneren Rand der Brennkammer 2 auf. Hierzu sind Absätze 20 als Auflage- und Positionierhilfen am Trennblech 12 ausgeformt. Das Trennblech 12 erstreckt sich bis unterhalb des Grillrosts 6.

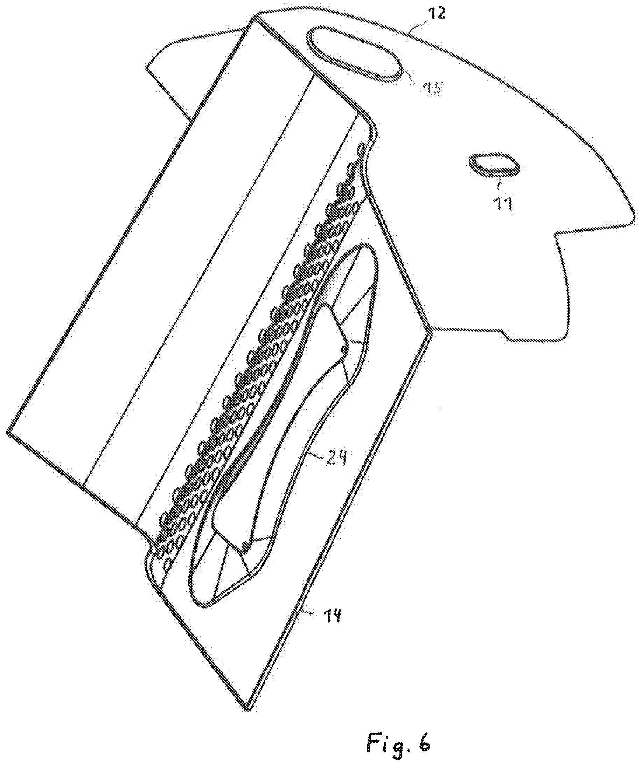

Das Trennblech 12 ist mit einer Öffnung 15 zum Eingriff von Fingern resp. einer Hand versehen ( Fig. 3 und 6).

Zusätzlich kann das Trennblech ggf. einen horizontalen und beidseitig zu seiner Hauptfläche 18 und entlang der Ausdehnung zwischen den Absätzen 20 verlaufenden Steg aufweisen. Mit diesem optionalen Steg kann das Trennblech 12 dann auf die Randbereiche zweier benachbarter Roste 61, 62 resp. einen inneren Rand der Brennkammer 2 aufgelegt werden.

Zusätzlich erstreckt sich das Trennblech 12 in dieser Ausführungsform ebenfalls bis unterhalb der Rostfläche bzw. des Steges bis zur Brenneranordnung 3 und ist im Spalt zwischen den Rosten 61, 62 geführt.

Ebenso können am Trennblech 12 auch Aufnahmen 11 (Lager) für einen Drehspiess o. a. sowie eine Greiföffnung 15 in der Hauptfläche 18 vorgesehen sein.

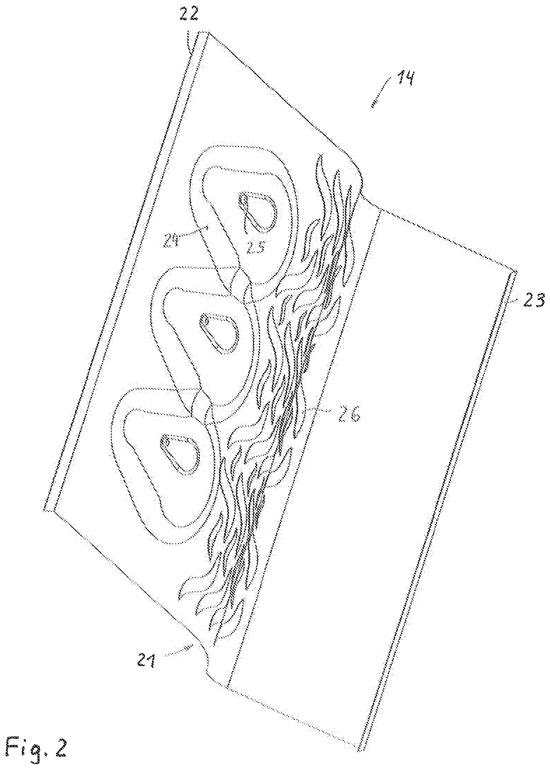

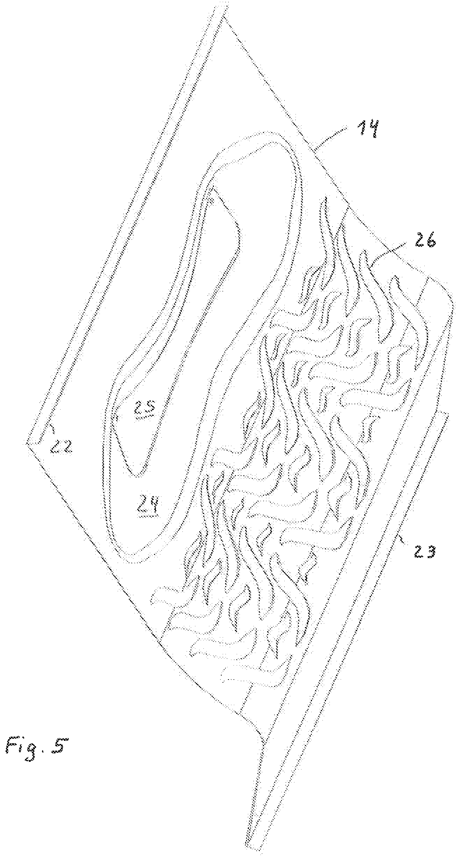

Weiterhin ist der Gasgrill 1 noch mit einem Leitblech 14 (DGS heat diffuser), siehe Fig. 1, 2 und 5, ausrüstbar, das in Richtung der Hauptachse 17 des Gasgrills 1 zumindest einen Teil der Brenneranordnung 3 und des Flammenschutzes 19 zwecks indirekter Hitze bzw. indirekter Wärmeführung abdeckt. Grundsätzlich kann es jedoch in beliebiger Breite ausgeführt sein. Es liegt wie das Trennblech 12 auf den inneren Rändern der Brennkammer 2 auf.

Das Leitblech 14 weist keine Befestigungselemente zur Verbindung mit der Brennkammer 2 o. a. auf und ist lose ein- oder auflegbar (Fig. 1).

Das Leitblech 14 erstreckt sich zwischen Frontseite und Rückwand der Brennkammer 2, mit einer, von der Frontseite ausgehend (oder umgekehrt von der Rückseite), ansteigenden Neigung (in Bezug auf die Brennkammerebene 16) bis zu einem gerundeten Bereich 21 und fällt nach dem gerundeten Bereich 21 wieder ab und kann bis zur Auflage an der Rückseitenwand (oder umgekehrt zur Frontseitenwand) ggf. wieder leicht ansteigen.

Kanten 22, 23 des Leitblechs 14 sind an den Auflagestellen senkrecht zur Hauptfläche des Leitblechs 14 winklig, bevorzugt um bis zu 90° abgekantet, an der Rückwand nach oben abgekantet und an der Frontseite nach unten abgekantet. Somit kann die rückwandseitige Kante 23 zugleich als Sammel- und Ablaufrinne für, beim Grillen freiwerdende Flüssigkeit verwendet werden. Zwischen der frontseitigen Kante 22 und dem gerundeten Bereich 21 ist das Leitblech 14 mit mindestens einer oder mehreren, bevorzugt zwei oder drei Vertiefungen 24 (Auffangvertiefung) versehen, die an der tiefsten Stelle mindestens eine Öffnung 25 aufweisen. In diesen Vertiefungen 24 wird die wesentliche Menge der beim Grillen freiwerdenden Flüssigkeit gesammelt und diese kann durch die Öffnungen 25 auf nicht dargestellte Fettablaufrinnen ablaufen. Im gerundeten Bereich 21 weist das Leitblech 14 eine Mehrzahl von Öffnungen bzw. Schlitze 26 auf, durch die Heissluft konzentriert auf das Grillgut geführt wird, ähnlich zu einem Rückwandstrahler. Die Schlitze 26 sind in ihrer Längsausdehnung bevorzugt horizontal angeordnet.

in einer weiteren Ausführungsform kann am Leitblech 14 anstelle mehrerer Vertiefungen 24 zum Beispiel auch eine einzige, grosse Vertiefung 24 mit ebenfalls nur einer Öffnung 25 ausgeformt sein (Fig. 6). Ebenso können die Öffnungen 26 zum Beispiel rund oder kreisförmig anstatt schlitzförmig ausgebildet sein.

Der Grillrost 6 wird bevorzugt zum einsetzen des Leitblechs 14 entfernt (und nach der Entnahme des Leitblechs 14 wieder aufgelegt).

Das Leitblech 14 findet insbesondere in Verbindung mit einem Drehspiess Anwendung, der zwischen den Seitenwänden 10 oder einer Seitenwand 10 und dem Trennblech 12 drehbar gelagert anordenbar ist. Das Leitblech 14 ist daher so geformt, dass das zu drehende Grillgut einen möglichst gleichmässigen Abstand vom Leitblech 14 im gerundeten Bereich 21 und im ansteigenden Bereich über den Vertiefungen 24 aufweist.

Das Leitblech 14 ermöglicht ein energiesparendes, indirektes Garen von Grillgut und wirkt als Geschmacksverstärker für das Grillgut infolge der Heissluftführung durch die Schlitze 26 und von in den Vertiefungen 24 verdunstender Flüssigkeit.

Anstelle einer Brenneranordnung 3 können auch Elektroheizstäbe als Wärmequelle eingesetzt werden, bei entsprechender konstruktiver Anpassung auch Holzkohle, Brikettes, Pellets oder andere brennbare, organische Stoffe.

### Liste der Bezugszeichen

1 Gasgrill
2 Brennkammer
3 Brenneranordnung
4 Untergestell
5 Haube
6 Grillrost
7 Handgriff
8 Drehgriff
9 Leuchtring
10 Seitenwand
11 Aufnahme
12 Trennblech
14 Leitblech
15 Greiföffnung
16 Brennkammerebene
17 Hauptachse
18 Hauptfläche
19 Flammenschutz
20 Absatz
21 Bereich
22 Kante
23 Kante
24 Vertiefung
25 Öffnung
26 Schlitz
61 Rost
62 Rost

## Patentansprüche

1. Grill zum Grillen, Garen oder Backen von Speisen auf einem Grillrost (6) oder dergleichen, insbesondere zur Verwendung im Freien, der eine Brennkammer (2) umfasst, in der eine Brenneranordnung (3) vorgesehen ist, wobei die Brennkammer (2) mit einer klappbaren Haube (5) versehen ist, die im geschlossenen Zustand den Grillrost (6) abdeckt, wobei der Grill mit einem, einen Grillrost (6) teilenden, einlegbaren Trennblech (12) versehen ist, wobei sich die Hauptfläche (18) des Trennblechs (12) oberhalb und bis unterhalb des Grillrosts (6) bis zur Brenneranordnung (3) erstreckt, **gekennzeichnet dadurch, dass** das Trennblech (12) einen senkrecht und beidseitig zu seiner Hauptfläche (18) verlaufenden Steg aufweist und dass der Grill weiterhin mit einem Leitblech (14) versehen ist, welches sich zwischen Frontseite und Rückwand der Brennkammer (2) erstreckend und auf inneren Rändern der Brennkammer (2) aufliegend ausgebildet ist.

2. Grill nach Anspruch 1, **dadurch gekennzeichnet, dass** am Trennblech (12) Aufnahmen (11) als Lager für einen Drehspiess sowie eine Greiföffnung (15) vorgesehen sind.

3. Grill nach Anspruch 1 oder 2, **dadurch gekennzeichnet, dass** das Leitblech (14) in Richtung einer Hauptachse (17) der Brennkammer (2) in beliebiger Breite ausgeführt sein kann und zumindest einen Teil der Brenneranordnung (3) abdeckt.

4. Grill nach Anspruch 3, **dadurch gekennzeichnet, dass** das Leitblech (14) so ausgebildet ist, dass es, von einer Frontseite der Brennkammer (2) ausgehend, mit ansteigender Neigung in einen gerundeten Bereich (21) übergeht, an den sich ein weiterer geneigter Bereich anschliesst, und dass die geneigten Bereiche gerade oder leicht gebogen sind, oder in umgekehrter Richtung erfolgend.

5. Grill nach einem der Ansprüche 1 bis 4, **dadurch gekennzeichnet, dass** die geneigten Bereiche an Auflagestellen zur Brennkammer (2) hin winklig abgekantet sind, wobei dass Kanten (22, 23) des Leitblechs (14) an den Auflagestellen zur Hauptfläche des Leitblechs (14) um bis zu 90° abgekantet sind.

6. Grill nach einem der Ansprüche 1 bis 5, **dadurch gekennzeichnet, dass** das Leitblech (14) zwischen der frontseitigen Kante (22) und dem gerundeten Bereich (21) mit mindestens einer oder mehreren Vertiefungen 24 versehen ist, die an ihrer tiefsten Stelle mindestens eine Öffnung (25) aufweisen.

7. Grill nach einem der Ansprüche 1 bis 6, **dadurch gekennzeichnet, dass** das Leitblech (14) im gerundeten Bereich (21) eine Mehrzahl von Öffnungen bzw. Schlitzen (26) aufweist.

8. Grill nach einem der Ansprüche 1 bis 7, **dadurch gekennzeichnet, dass** er mit mindestens einem Drehgriff (8) zur Einstellung der Brennerleistung versehen ist, dem ein Leuchtring (9) in Form von farbigen LED zugeordnet ist.

## Claims

1. Grill for grilling, cooking or baking food on a grill grate (6) or the like, in particular for outdoor use, comprising a firing chamber (2) in which a firing arrangement (3) is provided, wherein the firing chamber (2) is provided with a hinged bonnet (5) which covers the grill grate (6) in the closed state, wherein the grill is provided with an insertable partition plate (12) dividing a grill grate (6), wherein the main surface (18) of the partition plate (12) extends above and below the grill grate (6) as far as the firing arrangement (3), **characterized in that** the partition plate (12) has a web extending perpendicularly and on both sides to its main surface (18), and **in that** the grill is further provided with a guiding plate (14) which extends between the front side and rear wall of the firing chamber (2) and is designed to rest on inner edges of the firing chamber (2).

2. Grill according to claim 1, **characterized in that** on the guiding plate (12) receptacles (11) as bearings for a rotating spit and a gripping opening (15) are provided.

3. Grill according to claim 1 or 2, **characterized in that** the guiding plate (14) can be of any width in the direction of a main axis (17) of the burning chamber (2) and covers at least part of the firing arrangement (3) .

4. Grill according to claim 3, **characterized in that** the guiding plate (14) is designed in such a way that, starting from a front side of the firing chamber (2), it merges with an increasing inclination into a rounded region (21), which is followed by a further inclined region, and that the inclined regions are straight or slightly curved, or resulting in the opposite direction.

5. Grill according to one of claims 1 to 4, **characterized in that** the inclined regions are, at support points, angled towards the firing chamber (2), wherein edges (22, 23) of the guiding plate (14) at the support points are angled by up to 90° towards the main surface of the guiding plate (14).

6. Grill according to one of claims 1 to 5, **characterized in that** the guiding plate (14) is provided between the front edge (22) and the rounded region (21) with at least one or more recesses 24, which have at least one opening (25) at their deepest point.

7. Grill according to one of claims 1 to 6, **characterized in that** the guiding plate (14) has a plurality of openings or slots (26) in the rounded area (21).

8. Grill according to one of claims 1 to 7, **characterized in that** it is provided with at least one rotary handle (8) for adjusting the firing power, with which a light ring (9) in the form of colored LEDs is associated.

## Revendications

1. Gril permettant de griller, de cuisiner ou de cuire des aliments sur une grille de gril (6) ou similaire, en particulier destiné à l'utilisation en plein air, qui comprend une chambre de combustion (2) dans laquelle est prévu un agencement formant brûleur (3), dans lequel la chambre de combustion (2) est pourvue d'un capot (5) rabattable qui recouvre la grille de gril (6) à l'état fermé, dans lequel le gril est pourvu d'une tôle de séparation (12) pouvant être insérée et divisant une grille de gril (6), dans lequel la surface principale (18) de la tôle de séparation (12) s'étend au-dessus et jusqu'en dessous de la grille de gril (6), jusqu'à l'agencement formant brûleur (3), **caractérisé en ce que** la tôle de séparation (12) présente une nervure s'allongeant perpendiculairement et de part et d'autre de sa surface principale (18) **et en ce que** le gril est en outre pourvu d'une tôle de guidage (14) qui est réalisée de manière à s'étendre entre un côté frontal et une paroi arrière de la chambre de combustion (2) et à s'appuyer sur des bords intérieurs de la chambre de combustion (2).

2. Gril selon la revendication 1, **caractérisé en ce que** des logements (11) servant d'appui pour un tournebroche ainsi qu'une ouverture de préhension (15) sont prévus sur la tôle de séparation (12).

3. Gril selon la revendication 1 ou 2, **caractérisé en ce que** la tôle de guidage (14) peut être conçue dans une largeur quelconque dans la direction d'un axe principal (17) de la chambre de combustion (2) et recouvre au moins une partie de l'agencement formant brûleur (3).

4. Gril selon la revendication 3, **caractérisé en ce que** la tôle de guidage (14) est réalisée de sorte que, en partant d'un côté frontal de la chambre de combustion (2), elle devient, avec une inclinaison croissante, une zone arrondie (21) à laquelle se relie une zone inclinée supplémentaire, **et en ce que** les zones inclinées sont droites ou légèrement courbées, ou se produisent dans le sens inverse.

5. Gril selon l'une des revendications 1 à 4, **caractérisé en ce que** les zones inclinées sont repliées de manière angulaire au niveau de points d'appui par rapport à la chambre de combustion (2), dans lequel les bords (22, 23) de la tôle de guidage (14) sont repliés jusqu'à 90° au niveau des points d'appui par rapport à la surface principale de la tôle de guidage (14).

6. Gril selon l'une des revendications 1 à 5, **caractérisé en ce que** la tôle de guidage (14) est pourvue d'au moins un ou plusieurs renfoncements (24) entre le bord (22) côté frontal et la zone arrondie (21), lesquels renfoncements présentent au moins une ouverture (25) à leur point le plus profond.

7. Gril selon l'une des revendications 1 à 6, **caractérisé en ce que** la tôle de guidage (14) présente une pluralité d'ouvertures ou de fentes (26) dans la zone arrondie (21).

8. Gril selon l'une des revendications 1 à 7, **caractérisé en ce qu'**il est pourvu d'au moins une poignée rotative (8) pour le réglage de la puissance du brûleur, à laquelle poignée rotative est associé un anneau lumineux (9) sous forme de DEL de couleur.
